# EUROPÄISCHE PATENTANMELDUNG

(11) **EP 2 280 323 A1**
(43) Veröffentlichungstag der Anmeldung: **02.02.2011**
(21) Anmeldenummer: 09164842.8
(22) Anmeldetag: 08.07.2009
(51) Int. Cl.: G05B 13/04, B21B 37/00

(54) **Steuerverfahren für eine Beeinflussungseinrichtung für ein Walzgut**

(71) Anmelder: SIEMENS AKTIENGESELLSCHAFT, 80333 München (DE)
(72) Erfinder: Weinzierl, Klaus Dr., 90480 Nürnberg (DE); Löffler, Hans-Ulrich Dr., 91054 Erlangen (DE)

(57) **Zusammenfassung**

Eine Steuereinrichtung (3) steuert eine Beeinflussungseinrichtung (1) an, so dass diese das Walzgut (2) entsprechend beeinflusst. Die Steuereinrichtung (3) erfasst in Verbindung mit dem Beeinflussen des Walzguts (2) in Echtzeit mindestens eine Messgröße (F, M, T), die vom Wert einer ersten Eigenschaft des Walzguts (2) zum Zeitpunkt des Erfassens der Messgröße (F, M, T) abhängt. Sie ermittelt mittels eines die Vorgänge in der Beeinflussungseinrichtung (1) beschreibenden Modells (11) des Walzguts (2) eine korrespondierende Modellgröße (F', M', T'). Das Modell (11) umfasst ein auf mathematisch-physikalischen Gleichungen basierendes erstes Teilmodell (12), unter dessen Verwendung der Wert der ersten Eigenschaft ermittelbar ist. Es umfasst ein auf mathematischphysikalischen Gleichungen basierendes zweites Teilmodell (13), mittels dessen die zeitliche Entwicklung einer zweiten Eigenschaft des Walzguts (2) während des Beeinflussens ermittelbar ist. Der Wert der ersten Eigenschaft des Walzguts (2) zum Zeitpunkt des Erfassens der Messgröße (F, M, T) hängt vom zeitlichen Verlauf der zweiten Eigenschaft oder vom Wert der zweiten Eigenschaft des Walzguts (2) zum Zeitpunkt des Erfassens der Messgröße (F, M, T) ab und/oder die Messgröße (F, M, T) hängt zusätzlich zur Abhängigkeit vom Wert der ersten Eigenschaft auch vom Wert der zweiten Eigenschaft des Walzguts (2) zum Zeitpunkt des Erfassens der Messgröße (F, M, T) ab. Die Steuereinrichtung (3) ermittelt mittels des Modells (11) den zeitlichen Verlauf der zweiten Eigenschaft des Walzguts (2), den Wert der ersten Eigenschaft des Walzguts (2) zum Zeitpunkt des Erfassens der Messgröße (F, M, T) und unter Verwendung des ermittelten zeitlichen Verlaufs der zweiten Eigenschaft des Walzguts (2) und des Wertes der ersten Eigenschaft des Walzguts (2) zum Zeitpunkt des Erfassens der Messgröße (F, M, T) die Modellgröße (F', M', T'). Sie adaptiert anhand der Abweichung der erfassten Messgröße (F, M, T) von der Modellgröße (F', M', T') zwar das zweite Teilmodell (13), nicht aber das erste Teilmodell (12) oder adaptiert durch Optimieren einer Kostenfunktion (K1) sowohl das erste Teilmodell (12) als auch das zweite Teilmodell (13), wobei in die Kostenfunktion (K) jedoch zusätzlich zu der Abweichung der Messgröße (F, M, T) von der Modellgröße (F', M', T') ein von der Adaption des ersten Teilmodells (12) als solcher abhängiger Strafterm (K2) eingeht.

## Beschreibung

Die vorliegende Erfindung betrifft ein Steuerverfahren für eine Beeinflussungseinrichtung für ein Walzgut,
- wobei eine Steuereinrichtung die Beeinflussungseinrichtung mit Ansteuerbefehlen ansteuert, so dass die Beeinflussungseinrichtung das Walzgut entsprechend den Ansteuerbefehlen beeinflusst,
- wobei die Steuereinrichtung in Verbindung mit dem Beeinflussen des Walzguts durch die Beeinflussungseinrichtung in Echtzeit mindestens eine Messgröße erfasst, die vom Wert einer ersten Eigenschaft des Walzguts zum Zeitpunkt des Erfassens der Messgröße abhängt,
- wobei die Steuereinrichtung mittels eines die Vorgänge in der Beeinflussungseinrichtung beschreibenden Modells des Walzguts eine mit der erfassten Messgröße korrespondierende Modellgröße ermittelt,
- wobei das Modell ein auf mathematisch-physikalischen Gleichungen basierendes erstes Teilmodell umfasst, unter dessen Verwendung der Wert der ersten Eigenschaft des Walzguts zum Zeitpunkt des Erfassens der Messgröße ermittelbar ist,
- wobei das Modell ein auf mathematisch-physikalischen Gleichungen basierendes zweites Teilmodell umfasst, mittels dessen die zeitliche Entwicklung einer zweiten Eigenschaft des Walzguts während des Beeinflussens ermittelbar ist,
- wobei der Wert der ersten Eigenschaft des Walzguts zum Zeitpunkt des Erfassens der Messgröße vom zeitlichen Verlauf der zweiten Eigenschaft oder vom Wert der zweiten Eigenschaft des Walzguts zum Zeitpunkt des Erfassens der Messgröße abhängt und/oder die Messgröße zusätzlich zur Abhängigkeit vom Wert der ersten Eigenschaft auch vom Wert der zweiten Eigenschaft des Walzguts zum Zeitpunkt des Erfassens der Messgröße abhängt,
- wobei die Steuereinrichtung mittels des Modells den zeitlichen Verlauf der zweiten Eigenschaft des Walzguts, den Wert der ersten Eigenschaft des Walzguts zum Zeitpunkt des Erfassens der Messgröße und unter Verwendung des ermittelten zeitlichen Verlaufs der zweiten Eigenschaft des Walzguts und des Wertes der ersten Eigenschaft des Walzguts zum Zeitpunkt des Erfassens der Messgröße die Modellgröße ermittelt.

Die vorliegende Erfindung betrifft weiterhin ein Steuerprogramm, das Maschinencode umfasst, der von einer Steuereinrichtung für eine Beeinflussungseinrichtung für ein Walzgut unmittelbar abarbeitbar ist und dessen Abarbeitung durch die Steuereinrichtung bewirkt, dass die Steuereinrichtung ein derartiges Steuerverfahren ausführt.

Weiterhin betrifft die vorliegende Erfindung eine Steuereinrichtung für eine Beeinflussungseinrichtung für ein Walzgut, wobei die Steuereinrichtung derart ausgebildet ist, dass sie im Betrieb ein derartiges Steuerverfahren ausführt.

Schließlich betrifft die vorliegende Erfindung eine Beeinflussungseinrichtung für ein Walzgut, die von einer derartigen Steuereinrichtung gesteuert wird.

Bei der Herstellung von Walzgut, beispielsweise von Stahl in einer Warmbandstraße, werden Modelle verwendet, um insbesondere Materialeigenschaften wie beispielsweise Gefügestruktur, Phasenanteile und mechanische Eigenschaften vorhersagen zu können. Die Modelle können beispielsweise verwendet werden, um online oder offline die Ansteuerbefehle für die Warmbandstraße zu ermitteln. Alternativ ist eine reine Vorhersage der Eigenschaften möglich.

Die Modelle sollen möglichst genau sein. Es ist daher erforderlich, die Modelle nach dem Aufstellen zu überprüfen und zu adaptieren. Das Adaptieren erfolgt anhand von Messgrößen, die mit korrespondierenden Modellgrößen verglichen werden. Für manche Modelle sind die geeigneten Messgrößen ohne weiteres ermittelbar. Für andere Modelle ist es schwer und teilweise im Stand der Technik gar nicht bekannt, die korrespondierenden Messgrößen online zu ermitteln.

Ein Steuerverfahren der eingangs genannten Art ist beispielsweise aus der DE 10 2007 025 447 A1 bekannt. Bei dem bekannten Verfahren ist das erste Teilmodell ein Wärmeübergangsmodell, das zweite Teilmodell ein Phasenumwandlungsmodell. Modelliert wird das Verhalten eines Stahlvolumens in einer Kühlstrecke. Es erfolgt eine gekoppelte Ermittlung möglicher Adaptionsfaktoren für das erste Teilmodell und das zweite Teilmodell. Im Rahmen des bekannten Verfahrens werden mögliche Wertepaare für die Adaptionsfaktoren gespeichert. Wenn später ein anderes Walzgut beeinflusst wird, werden erneut mögliche Wertepaare ermittelt. Durch Vergleich der bei den beiden Beeinflussungsvorgängen ermittelten Wertepaare kann die Menge an zulässigen Wertepaaren reduziert werden. Im Idealfall kann auf diese Weise ein einziges Wertepaar ermittelt werden, so dass also die Adaptionsfaktoren für das erste und das zweite Teilmodell eindeutig ermittelbar sind. In vielen Fällen verbleibt jedoch eine Unsicherheit, was tatsächlich die physikalisch richtigen Werte der Adaptionsfaktoren sind. Denn insbesondere verbleibt in vielen Fällen eine Unsicherheit dahingehend, dass ein Fehler des ersten Teilmodells durch einen entgegengesetzt gerichteten, betragsmäßig aber gleich großen Fehler des zweiten Teilmodells kompensiert wird.

Die Aufgabe der vorliegenden Erfindung besteht darin, Möglichkeiten zu schaffen, mittels derer der Adaptionsfaktor für das zweite Teilmodell korrekt ermittelbar ist.

Die Aufgabe wird durch ein Steuerverfahren mit den Merkmalen des Anspruchs 1 gelöst. Vorteilhafte Ausgestaltungen des erfindungsgemäßen Steuerverfahrens sind Gegenstand der abhängigen Ansprüche 2 bis 10.

Erfindungsgemäß ist vorgesehen, ein Steuerverfahren der eingangs genannten Art dadurch auszugestalten, dass die Steuereinrichtung
- entweder anhand der Abweichung der erfassten Messgröße von der Modellgröße zwar das zweite Teilmodell, nicht aber das erste Teilmodell adaptiert,
- oder durch Optimieren einer Kostenfunktion sowohl das erste Teilmodell als auch das zweite Teilmodell adaptiert, in die Kostenfunktion zusätzlich zu der Abweichung der Messgröße von der Modellgröße jedoch ein von der Adaption des ersten Teilmodells als solcher abhängiger Strafterm eingeht.

Die erfindungsgemäße Vorgehensweise führt nur scheinbar zu einem einfachen Verlagern der Unsicherheit in die Adaptierung des ersten Teilmodells. Denn in vielen Fällen kann auf Grund von anderen Umständen, also anhand von Zusatzinformationen über das die Beeinflussungseinrichtung durchlaufende Walzgut, die von der zweiten Eigenschaft verschieden sind, entschieden werden, ob die zweite Eigenschaft des Walzguts beim Erfassen der mindestens einen Messgröße einen vorbestimmten Wert aufweist. Es ist daher möglich, dass in diesem Fall die Steuereinrichtung anhand der Abweichung der Messgröße von der Modellgröße ausschließlich das erste, nicht aber das zweite Teilmodell adaptiert und das Adaptieren des zweiten Teilmodells nur vornimmt, wenn nicht entschieden werden kann, ob die zweite Eigenschaft des Walzguts beim Erfassen der mindestens einen Messgröße den vorbestimmten Wert aufweist.

Es ist möglich, das zuletzt beschriebene alternative Adaptieren des ersten und des zweiten Teilmodells je nach Lage des Einzelfalls vorzunehmen ("wie es gerade kommt"). Bevorzugt ist jedoch, dass das Adaptieren des ersten Teilmodells vorab erfolgt. Das Adaptieren des ersten Teilmodells kann alternativ online oder offline erfolgen.

Unabhängig davon, ob das erste Teilmodell adaptiert wird oder nicht, ist bevorzugt, dass das Adaptieren des zweiten Teilmodells online erfolgt.

Das erfindungsgemäße Steuerverfahren ist in verschiedenen Ausgestaltungen einsetzbar. Beispielsweise ist es möglich, dass das erste Teilmodell ein Wärmeübergangsmodell umfasst, mittels dessen der Wärmeübergang des Walzguts an seine Umgebung modelliert wird und das als erste Eigenschaft die Temperatur des Walzguts liefert. Alternativ oder zusätzlich kann das erste Teilmodell ein Walzmodell umfassen, mittels dessen beim Walzen des Walzguts auftretende Walzkräfte und/oder Walzmomente modelliert werden und das als erste Eigenschaft die beim Walzen des Walzguts auftretenden Walzkräfte und/oder Walzmomente liefert. Als weitere Ausgangsgröße kann das Walzmodell beispielsweise eine Umformenergie liefern, die beim jeweiligen Walzvorgang in das Walzgut eingebracht wird.

Das zweite Teilmodell kann beispielsweise ein Phasenumwandlungsmodell umfassen, mittels dessen die Phasenumwandlung des Walzguts modelliert wird und das als zweite Eigenschaft die Phasenanteile des Walzguts liefert. Besonders gute Ergebnisse haben hierbei Phasenumwandlungsmodelle geliefert, bei denen die Phasenumwandlung unter Verwendung der Gibbsschen freien Enthalpie modelliert wird. Alternativ oder zusätzlich kann das zweite Teilmodell ein Gefügemodell umfassen, mittels dessen die Rekristallisierung des Walzguts modelliert wird und das als zweite Eigenschaft die Gefügestruktur des Walzguts liefert.

Die Modellgröße und hiermit korrespondierend die Messgröße können nach Bedarf gewählt sein. Sie ist zumindest von der zweiten Eigenschaft verschieden. Sie kann darüber hinaus auch von der ersten Eigenschaft verschieden sein. In vielen Fällen wird sie jedoch mit der ersten Eigenschaft korrespondieren. Hierauf wird später näher eingegangen werden.

Auf Grund des Umstands, dass die erfasste Messgröße in Echtzeit zur Verfügung steht, ist es möglich, das Adaptieren des zweiten Teilmodells online vorzunehmen. Diese Vorgehensweise ist bevorzugt. Insbesondere (aber nicht ausschließlich) im Falle eines Adaptierens des zweiten Teilmodells online ist bevorzugt, dass der Steuereinrichtung ein Anfangszustand des ersten Walzguts und ein gewünschter Endzustand des ersten Walzguts vorgegeben sind und dass die Steuereinrichtung die Ansteuerbefehle unter Verwendung des Modells ermittelt.

Die Aufgabe wird weiterhin gelöst durch ein Steuerprogramm der eingangs genannten Art, dessen Abarbeitung durch die Steuereinrichtung bewirkt, dass die Steuereinrichtung ein erfindungsgemäßes Steuerverfahren ausführt.

Das Steuerprogramm ist in der Regel auf einem Datenträger in maschinenlesbarer Form gespeichert. Der Datenträger kann Bestandteil der Steuereinrichtung sein.

Die Aufgabe wird weiterhin durch eine Steuereinrichtung der eingangs genannten Art gelöst, die derart ausgebildet ist, das sie im Betrieb ein erfindungsgemäßes Steuerverfahren ausführt.

Schließlich wird die Aufgabe durch eine Beeinflussungseinrichtung für ein Walzgut gelöst, die von einer erfindungsgemäßen Steuereinrichtung gesteuert wird.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine Beeinflussungseinrichtung für ein Walzgut,
- FIG 2 und 3: mögliche Ausgestaltungen der Beeinflussungs- einrichtung von FIG 1,
- FIG 4: ein Ablaufdiagramm,
- FIG 5: ein regelungstechnisches Blockschaltbild und
- FIG 6 bis 9: Ablaufdiagramme.

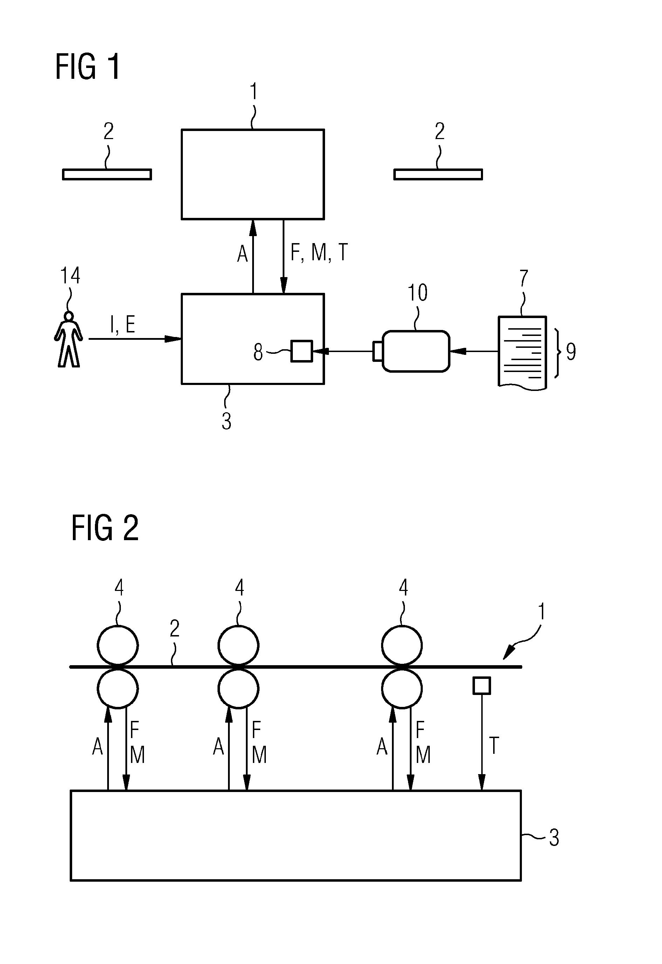

Gemäß FIG 1 wird eine Beeinflussungseinrichtung 1 für ein Walzgut 2 von einer Steuereinrichtung 3 gesteuert. Die Beeinflussungseinrichtung 1 wird von dem Walzgut 2 durchlaufen. In Verbindung mit dem Durchlauf des Walzguts 2 durch die Beeinflussungseinrichtung 1 beeinflusst die Beeinflussungseinrichtung 1 das Walzgut 2.

Beispielsweise kann die Beeinflussungseinrichtung 1 gemäß FIG 2 als Walzstraße ausgebildet sein. In diesem Fall weist die Beeinflussungseinrichtung 1 mindestens ein Walzgerüst 4 auf, in dem das Walzgut 2 gewalzt wird. Meist sind entsprechend der Darstellung von FIG 2 mehrere Walzgerüste 4 vorhanden, in denen das Walzgut 2 sukzessiv gewalzt wird.

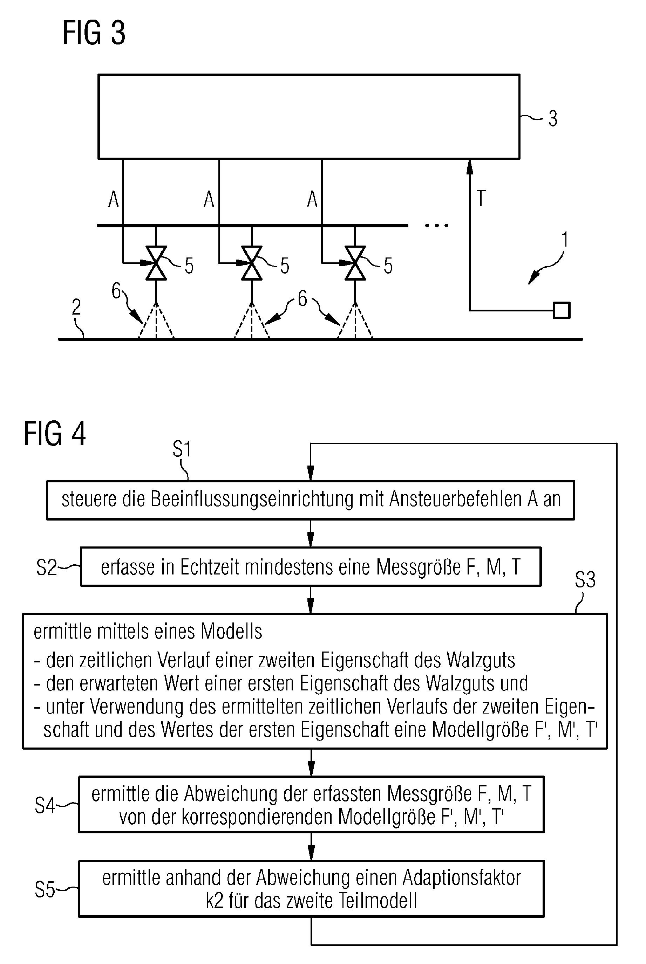

Alternativ kann die Beeinflussungseinrichtung 1 gemäß FIG 3 als Kühlstrecke für das Walzgut 2 ausgebildet sein. In diesem Fall wird das Walzgut 2 in der Kühlstrecke gekühlt. Meist wird über entsprechende Stellventile 5 quantitativ eingestellt, mit welcher Menge eines Kühlmittels 6 (beispielsweise Wasser) das Walzgut 2 beaufschlagt wird.

Die Steuereinrichtung 3 ist derart ausgebildet, dass sie im Betrieb ein Steuerverfahren für die Beeinflussungseinrichtung 1 ausführt. In der Regel ist die Steuereinrichtung 3 zu diesem Zweck mit einem Steuerprogramm 7 programmiert, das in einem Datenträger 8 abgespeichert ist, der Bestandteil der Steuereinrichtung 3 ist. Beispielsweise kann der Datenträger 8 als Festplatte der Steuereinrichtung 3 ausgebildet sein. Die Speicherung im Datenträger 8 erfolgt selbstverständlich in maschinenlesbarer Form.

Das Steuerprogramm 7 umfasst gemäß FIG 1 Maschinencode 9, der von der Steuereinrichtung 3 unmittelbar abarbeitbar ist. Das Abarbeiten des Maschinencodes 9 durch die Steuereinrichtung 3 bewirkt, dass die Steuereinrichtung 3 das Steuerverfahren ausführt.

Das Steuerprogramm 7 kann der Steuereinrichtung 3 auf beliebige Weise zugeführt worden sein. Rein beispielhaft ist in FIG 1 ein mobiler Datenträger 10 dargestellt, auf dem das Steuerprogramm 7 in maschinenlesbarer Form gespeichert ist. Der mobile Datenträger 10 ist gemäß der Darstellung von FIG 1 als USB-Memorystick ausgebildet. Es sind jedoch beliebige andere Ausgestaltungen ebenfalls möglich, beispielsweise als CD-ROM oder als SD-Speicherkarte.

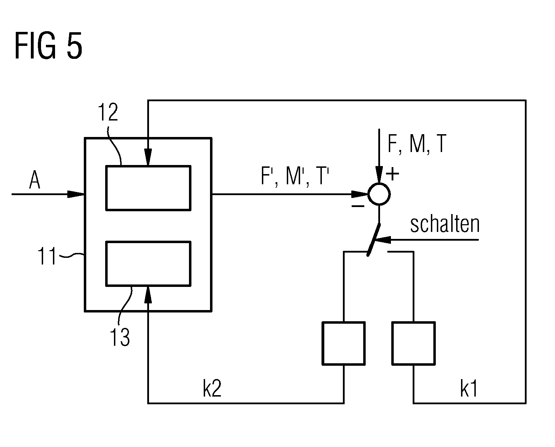

Das von der Steuereinrichtung 3 ausgeführte Steuerverfahren wird nachstehend in Verbindung mit FIG 4 näher erläutert. Teilweise wird in diesem Zusammenhang auch auf die Figuren 1 bis 3 sowie auf FIG 5 verwiesen werden.

Gemäß FIG 4 steuert die Steuereinrichtung 3 in einem Schritt S1 die Beeinflussungseinrichtung mit Ansteuerbefehlen A an. Dadurch wird erreicht, dass die Beeinflussungseinrichtung 1 das Walzgut 2 entsprechend den Ansteuerbefehlen A beeinflusst.

Im Falle der Ausbildung der Beeinflussungseinrichtung 1 als Walzstraße gemäß FIG 2 bewirken die Ansteuerbefehle A beispielsweise, dass die einzelnen Walzgerüste 4 der Walzstraße das Walzgut 2 mit entsprechenden Walzkräften F und Walzmomenten M beaufschlagen. Im Falle der Ausbildung der Beeinflussungseinrichtung 1 als Kühlstrecke gemäß FIG 3 kann die Steuereinrichtung 3 beispielsweise die einzelnen Stellventile 5 der Kühlstrecke derart ansteuern, dass sie das Walzgut 2 mit einem definierten zeitlichen und örtlichen Kühlmittelmengenverlauf beaufschlagen. Auch eine kombinierte Vorgehensweise ist möglich. Dies ist insbesondere dann möglich, wenn das Kühlmittel 6 - zumindest teilweise - zwischen den Walzgerüsten 4 auf das Walzgut 2 aufgebracht wird. Die entsprechende Vorgehensweise ist als solche im Stand der Technik bekannt. Rein beispielhaft wird auf die US 7,310,981 B2 verwiesen. Sie ist als solche nicht Gegenstand der vorliegenden Erfindung.

In Verbindung mit dem Beeinflussen des Walzguts 2 durch die Beeinflussungseinrichtung 1 erfasst die Steuereinrichtung 3 in einem Schritt S2 in Echtzeit mindestens eine Messgröße F, M, T. Auf die Messgrößen F, M, T wird später noch näher eingegangen werden. Rein beispielhaft seien als mögliche Messgrößen F, M, T jedoch für die Walzstraße die Walzkräfte F, die Walzmomente M und die Temperatur T erwähnt, für die Kühlstrecke die Temperatur T des Walzguts 2 beim Verlassen der Kühlstrecke.

Die Steuereinrichtung 3 weist gemäß FIG 5 intern ein Modell 11 des Walzguts 2 auf. Das Modell 11 beschreibt die Vorgänge in der Beeinflussungseinrichtung 1. Die Vorgänge können interne Vorgänge im Walzgut 2 und/oder Wechselwirkungen des Walzguts 2 mit der Beeinflussungseinrichtung 1 umfassen. Insbesondere umfasst das Modell 11 gemäß FIG 5 ein erstes und ein zweites Teilmodell 12, 13. Die Teilmodelle 12, 13 basieren auf mathematisch-physikalischen Gleichungen, insbesondere auf algebraischen und/oder Differenzialgleichungen.

Unter Verwendung des ersten Teilmodells 12 kann die Steuereinrichtung 3 den Wert einer ersten Eigenschaft des Walzguts 2 zum Zeitpunkt des Erfassens der Messgröße F, M, T ermitteln. Der Begriff "unter Verwendung" ist in einem weiten Sinne zu verstehen. Er bedeutet, dass das erste Teilmodell 12 zumindest unter anderem zur Ermittlung des Werts der ersten Eigenschaft herangezogen wird. Es soll aber nicht ausgeschlossen sein, dass zur Ermittlung der ersten Eigenschaft zusätzlich andere Elemente und Größen benötigt werden. Insbesondere soll nicht ausgeschlossen sein, dass zur Ermittlung des entsprechenden Wertes zusätzlich zum ersten Teilmodell 12 auch das zweite Teilmodell 13 herangezogen wird. Weiterhin kann es möglich sein, dass unter Verwendung des ersten Teilmodells 12 (der Begriff "unter Verwendung" wurde soeben definiert) ein zeitlicher Verlauf der ersten Eigenschaft ermittelt wird. Verschiedene Beispiele:
Es ist möglich, dass das erste Teilmodell 12 die Wärmeleitung im Walzgut 2 einschließlich des Wärmeübergangs zur Umgebung modelliert. In diesem Fall ist das erste Teilmodell 12 ein Wärmeübergangsmodell. Die erste Eigenschaft ist die Temperatur T des Walzguts 2. Im Falle der Ausgestaltung des ersten Teilmodells 12 als Wärmeübergangsmodell basiert das erste Teilmodell 12 auf der Fourierschen Wärmeleitungsgleichung und einer weiteren Gleichung, die dem Wärmeübergang an die Umgebung beschreibt. Um die Temperatur T des Walzguts 2 zu ermitteln, die gemäß dem ersten Teilmodell 12 erwartet wird, müssen die Wärmeleitungsgleichung und die Wärmeübergangsgleichung iterativ in kleinen Zeitschritten gelöst werden. In diesem Fall ist es daher erforderlich, den zeitlichen Verlauf der Temperatur T zu ermitteln, auch wenn später nur eine einzige Temperatur T benötigt wird, nämlich die zum Zeitpunkt der Erfassung der Messgröße F, M, T.

Falls die Temperatur T des Walzguts 2 zum Zeitpunkt der Erfassung der Messgröße F, M, T unter die Umwandlungstemperatur des Walzguts 2 sinkt, müssen bei der Ermittlung der Temperatur T weiterhin Phasenübergänge und die dabei frei werdenden Energien zeitrichtig berücksichtigt werden. Es kann daher erforderlich sein, zusätzlich zum ersten Teilmodell 12 mindestens ein weiteres Teilmodell 13 zu berücksichtigen, nämlich ein Phasenumwandlungsmodell, mittels dessen die Phasenumwandlungen des Walzguts 2 modelliert werden. Ein derartiges Teilmodell 13 liefert als Ausgangsgrößen die Phasenanteile des Walzguts 2, die zur Ermittlung der bei der Phasenumwandlung frei gesetzten Energie benötigt werden. Das Phasenumwandlungsmodell kann alternativ die Änderungen der Phasenanteile ermitteln. Es kann ein zweites Teilmodell 13 im Sinne der vorliegenden Erfindung sein. Darauf wird später eingegangen werden.

Alternativ kann das erste Teilmodell 12 beispielsweise ein Walzmodell sein, mittels dessen beim Walzen des Walzguts 2 auftretende Walzkräfte F und/oder Walzmomente M modelliert werden und das als erste Eigenschaft die beim Walzen des Walzguts 2 auftretenden Walzkräfte F und/oder Walzmomente M liefert. In diesem Fall ist keine Ermittlung eines zeitlichen Verlaufs der ersten Eigenschaft erforderlich. Das Walzmodell 12 kann aber mit einem Wärmeübergangsmodell, einem Phasenumwandlungsmodell und/oder einem Gefügemodell gekoppelt sein. Das Wärmeübergangsmodell und das Phasenmodell wurden obenstehend bereits erläutert. Ein Gefügemodell ist ein Modell, mittels dessen die Rekristallisierung das Walzguts 2 modelliert wird und das als zweite Eigenschaft die Gefügestruktur des Walzguts 2 und eine damit einhergehende Materialverfestigung liefert. Das Wärmeübergangsmodell, das Phasenumwandlungsmodell und/oder das Gefügemodell können zweite Teilmodelle 13 im Sinne der vorliegenden Erfindung sein. Auch hierauf wird später näher eingegangen werden.

Mittels des zweiten Teilmodells 13 ist die zeitliche Entwicklung einer zweiten Eigenschaft des Walzguts 2 während des Beeinflussens ermittelbar. Der Begriff "zeitliche Entwicklung" bedeutet, dass ausgehend vom jeweiligen momentanen Zustand des Walzguts 2 in kleinen Zeitschritten nach und nach der zeitliche Verlauf der zweiten Eigenschaft des Walzguts 2 ermittelt wird. Das zweite Teilmodell 13 basiert daher zumindest teilweise auf Differenzialgleichungen. Wie bereits erwähnt, kann das zweite Teilmodell 13 ein Phasenumwandlungsmodell oder ein Gefügemodell sein. Wenn das erste Teilmodell 12 ein Walzmodell ist, kann das zweite Teilmodell 13 auch ein Wärmeübergangsmodell sein.

Gemäß FIG 4 ermittelt die Steuereinrichtung 3 in einem Schritt S3 mittels des Modells 11 im Ergebnis
- den zeitlichen Verlauf der zweiten Eigenschaft des Walzguts 2,
- einen erwarteten Wert der ersten Eigenschaft des Walzguts 2 zum Zeitpunkt des Erfassens der Messgröße F, M, T und
- unter Verwendung des ermittelten zeitlichen Verlaufs der zweiten Eigenschaft des Walzguts 2 und des erwarteten Wertes der ersten Eigenschaft des Walzguts 2 zum Zeitpunkt des Erfassens der Messgröße F, M, T eine Modellgröße F', M', T' .

Wie bereits erwähnt, kann es möglich sein, dass die einzelnen Ermittlungen sukzessive, aber getrennt voneinander erfolgen. In vielen Fällen sind die Ermittlungen jedoch miteinander gekoppelt. Beispielsweise sind, wenn Phasenumwandlungen auftreten, ein Wärmeübergangsmodell (erstes Teilmodell 12) und ein Phasenumwandlungsmodell (zweites Teilmodell 13) miteinander gekoppelt, so dass die zeitlichen Verläufe der Temperatur T und der Phasenumwandlung nur gekoppelt ermittelbar sind. In anderen Fällen kann es möglich sein, zunächst isoliert den zeitlichen Verlauf der zweiten Eigenschaft zu ermitteln und dann den Wert der ersten Eigenschaft zu ermitteln und schließlich anhand des ermittelten zeitlichen Verlaufs der zweiten Eigenschaft und des Wertes der ersten Eigenschaft die Modellgröße F', M', T' zu ermitteln.

Die Modellgröße F', M', T' kann mit der ersten Eigenschaft korrespondieren. Beispielsweise können das erste Teilmodell 12 ein Walzmodell sein und die Modellgröße F', M' mit der erwarteten Walzkraft F' oder dem erwarteten Walzmoment M' eines bestimmten Walzvorgangs korrespondieren. Ebenso können das erste Teilmodell 12 ein Wärmeübergangsmodell sein und die Modellgröße T' mit der erwarteten Temperatur T' des Walzguts 2 beim Verlassen der Beeinflussungseinrichtung 1 korrespondieren. Unabhängig davon, ob die anhand des Modells 11 ermittelte Modellgröße F', M', T' mit der ersten Eigenschaft korrespondiert oder nicht, korrespondiert die Modellgröße F', M', T' jedoch mit der Messgröße F, M, T. Die Modellgröße F', M', T' ist diejenige Größe, die auf Grund der modellgestützten Ermittlung als Messgröße F, M, T erwartet wird.

Die Messgröße F, M, T und die korrespondierende Modellgröße F', M', T' sowie die erste und die zweite Eigenschaft können prinzipiell beliebig gewählt werden, sofern folgende Bedingungen erfüllt sind:
- Die Messgröße F, M, T muss vom Wert der ersten Eigenschaft des Walzguts 2 zum Zeitpunkt der Erfassung der Messgröße F, M, T abhängen. Wenn die Modellgröße F', M', T' mit der ersten Eigenschaft korrespondiert, ist dies trivialerweise der Fall. Es sind aber auch andere Fallgestaltungen möglich.
   Beispielsweise sind die Walzkraft F und das Walzmoment M (= mögliche Messgrößen) temperaturabhängig (= mögliche erste Eigenschaft), aber nicht mit der Temperatur T identisch.
- Die Messgröße F, M, T muss zusätzlich zur Abhängigkeit vom Wert der ersten Eigenschaft auch vom Wert der zweiten Eigenschaft des Walzguts 2 abhängen. So ist beispielsweise die Fließkurve (= Kerneigenschaft eines Walzmodells) nicht nur temperaturabhängig (= mögliche erste Eigenschaft), sondern auch phasen- und gefügeabhängig (= mögliche zweite Eigenschaften).
- Der Wert der ersten Eigenschaft zum Zeitpunkt des Erfassens der Messgröße F, M, T muss vom Wert der zweiten Eigenschaft oder von deren zeitlichem Verlauf abhängen. So beeinflussen sich beispielsweise Temperaturentwicklung und Phasenumwandlung gegenseitig, so dass die beiden zeitlichen Verläufe nur gemeinsam ermittelbar sind, nicht aber unabhängig voneinander. Auch ist die Walzkraft F (mögliche erste Eigenschaft) von der Rekristallisation des Walzguts 2 (mögliche zweite Eigenschaft) abhängig.

Die erste der drei oben genannten Bedingungen muss stets erfüllt sein. Die zweite und die dritte der genannten Bedingungen können alternativ oder kumulativ erfüllt sein.

Gemäß FIG 4 ermittelt die Steuereinrichtung 3 in einem Schritt S4 die Abweichung der erfassten Messgröße F, M, T von der korrespondierenden Modellgröße F', M', T'. Weiterhin ermittelt die Steuereinrichtung 3 in einem Schritt S5 anhand der Abweichung einen Adaptionsfaktor k2 für das zweite Teilmodell 13. Sie adaptiert also das zweite Teilmodell 13. Der Adaptionsfaktor k2 wird nachfolgend als zweiter Adaptionsfaktor bezeichnet, weil mit ihm das zweite Teilmodell 13 adaptiert wird.

Ausgehend vom Schritt S5 geht die Steuereinrichtung 3 zum Schritt S1 zurück. Bei der später erfolgenden, erneuten Ausführung des Schrittes S3 wird die soeben vorgenommene Adaption des zweiten Teilmodells 13 berücksichtigt.

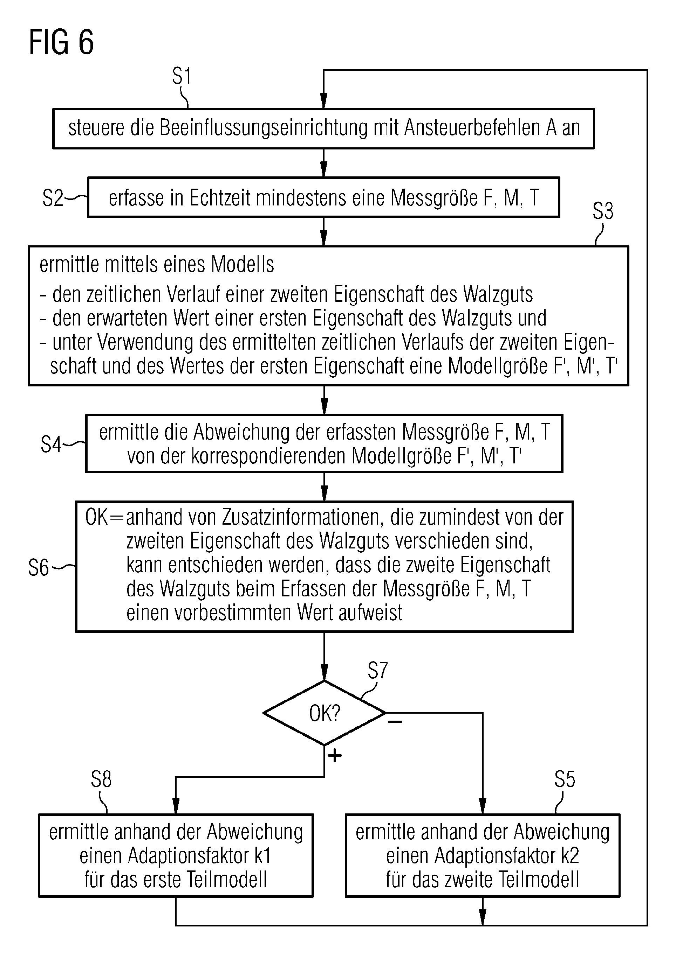

Das erste Teilmodell 12 wird von der Steuereinrichtung 3 im Rahmen des Schrittes S5 überhaupt nicht adaptiert. Damit diese Vorgehensweise zu korrekten Ergebnissen führt, muss sichergestellt sein, dass das erste Teilmodell 12 - im Rahmen der Modellgenauigkeit - korrekt ist. Nachfolgend wird in Verbindung mit FIG 6 aufgezeigt, wie dies gewährleistet werden kann.

FIG 6 baut auf der Vorgehensweise von FIG 4 auf. Zusätzlich zu den Schritten S1 bis S5 von FIG 4 sind Schritte S6 bis S8 vorhanden.

Im Schritt S6 werden Zusatzinformationen I über das die Beeinflussungseinrichtung 1 durchlaufende Walzgut 2 ausgewertet. Die Zusatzinformationen I sind zumindest von der zweiten Eigenschaft des Walzguts 2 verschieden. Sie können auch von der ersten Eigenschaft des Walzguts 2 verschieden sein. Sie können alternativ mit der ersten Eigenschaft übereinstimmen. Anhand der Zusatzinformationen I wird entschieden, ob die zweite Eigenschaft des Walzguts 2 beim Erfassen der Messgröße F, M, T einen vorbestimmten Wert aufweist. Je nachdem, ob diese Bedingung erfüllt ist oder nicht, wird einer logischen Variablen OK der entsprechende logische Wert (WAHR oder UNWAHR) zugewiesen.

Im Schritt S7 wird der Wert der logischen Variablen OK überprüft. Je nach Ergebnis der Überprüfung wird entweder der Schritt S5 oder der Schritt S8 ausgeführt.

Der Schritt S5 wurde bereits erläutert. Im Schritt S8 adaptiert die Steuereinrichtung 3 ausschließlich das erste Teilmodell 12, nicht aber das zweite Teilmodell 13. Sie ermittelt also im Schritt S8 analog zum Schritt S5 anhand der Abweichung einen Adaptionsfaktor k1 (nachfolgend als erster Adaptionsfaktor k1 bezeichnet), anhand dessen das erste Teilmodell 12 adaptiert wird.

Es ist möglich, dass entsprechend der Darstellung von FIG 6 die Schritte S6 und S7 von der Steuereinrichtung 3 selbsttätig ausgeführt werden. Alternativ ist es möglich, dass der Steuereinrichtung 3 gemäß FIG 1 von einem Bediener 14 eine entsprechende Entscheidung E vorgegeben wird.

Die Vorgehensweise von FIG 6, also das alternative Adaptieren des ersten Teilmodells 12 oder des zweiten Teilmodells 13, wird nachfolgend anhand von Beispielen näher erläutert.

Erstes Beispiel:
Das Walzgut 2 soll Stahl sein. Es wird in einer Walzstraße (vergleiche rein beispielhaft FIG 2) gewalzt. Das erste Teilmodell 12 ist ein Walzmodell, das zweite Teilmodell 13 ein Phasenumwandlungsmodell. Die Temperatur des Walzguts 2 beim Einlaufen in das erste Walzgerüst 4 der Walzstraße ist bekannt. Die Temperatur hinter dem letzten Walzgerüst 4 der Walzstraße wird erfasst und ist daher ebenfalls bekannt. Auf Grund der erfassten Temperaturen kann beispielsweise bekannt sein, dass der gesamte Walzprozess im austenitischen Bereich erfolgt. Es kann daher "guten Gewissens" angenommen werden, dass während des gesamten Walzvorgangs keinerlei Phasenumwandlungen erfolgen, das Walzgut 2 also stets vollständig in der Phase "Austenit" vorliegt. Daher kann im Schritt S8 anhand der erfassten Walzkräfte F und/oder Walzmomente M (= gleichzeitig erste Eigenschaften und Messgrößen) und der korrespondierenden Modellgrößen F', M' das Walzmodell (= erstes Teilmodell 12) adaptiert werden, da im Rahmen des momentan betrachteten Walzguts 2 das Phasenumwandlungsmodell (= zweites Teilmodell 13) nicht zum Tragen kommt. Anderenfalls, also wenn die Temperatur des Walzguts 2 unterhalb der Umwandlungstemperatur von Stahl liegt, wird anhand der Abweichung im Schritt S5 das Phasenumwandlungsmodell adaptiert.

Zweites Beispiel:
Wie zuvor mit dem Unterschied, dass das Walzmodell als solches korrekt ist, aber zusätzlich als erstes Teilmodell 12 ein Gefügemodell umfasst.

In diesem Fall entspricht das Gefügemodell dem ersten Teilmodell 12. Die erste Eigenschaft, das heißt die Gefügestruktur, ist in diesem Fall von der Modellgröße F', M' verschieden. Wenn das Walzgut 2 im austenitischen Bereich gewalzt wird, kann das Gefügemodell adaptiert werden. Wenn ein ferritisches Walzen erfolgt, wird das Phasenumwandlungsmodell adaptiert.

In dem Fall, dass das Walzmodell, das Phasenumwandlungsmodell und das Gefügemodell vorhanden sind, kann mittels ein- und derselben Messgröße F, M sogar ein alternatives Adaptieren aller drei Modelle (Walzmodell, Gefügemodell und Phasenumwandlungsmodell) erfolgen. Denn die Rekristallisation des Walzguts 2 ist eine Funktion der Phasenanteile, der Temperatur und der Zeit zwischen zwei Walzvorgängen. Wenn das Walzgut 2 im austenitischen Bereich und langsam gewalzt wird, kann "guten Gewissens" angenommen werden, dass das Walzgut 2 in der Phase Austenit vorliegt und die Rekristallisation vollständig ist. Es kommen daher weder das Phasenumwandlungsmodell noch das Gefügemodell zum Tragen. Dadurch ist ein Adaptieren ausschließlich des Walzmodells (= erstes Teilmodell 12) möglich. Bei einem langsamen Walzen im ferritischen Bereich kann das Phasenumwandlungsmodell (= eines der zweiten Teilmodelle 13) adaptiert werden. Bei einem schnellen Walzen im austenitischen Bereich kann das Gefügemodell (= ein weiteres zweites Teilmodell 13) adaptiert werden. Bei einem schnellen Walzen im ferritischen Bereich erfolgt beispielsweise keine Adaption.

Drittes Beispiel:
Das Walzgut 2 - beispielsweise Stahl - wird in einer Walzstraße - beispielsweise der Walzstraße von FIG 2 - gewalzt.
Das erste Teilmodell 12 ist ein Walzmodell, das zweite Teilmodell 13 ein Gefügemodell. Die Temperatur T des Walzguts 2 beim Einlaufen in das erste Walzgerüst 4 ist bekannt. Die ungefähre Abkühlrate des Walzguts 2 ist empirisch bekannt. Weiterhin sind die Abstände der Walzgerüste 4 voneinander und der Massenfluss bekannt. Im Ergebnis ist somit die Zeit bekannt, die zwischen den einzelnen Walzstichen vergeht. Wenn der Massenfluss niedrig genug ist und die Temperatur T des Walzguts 2 hoch genug ist, kann auf Grund von Erfahrungswerten "guten Gewissens" angenommen werden, dass die Rekristallisation des Walzguts 2 beim Einlaufen des Walzguts 2 in ein bestimmtes Walzgerüst 4 "schon längst" abgeschlossen ist. Es kann also "guten Gewissens" angenommen werden, dass das Walzgut 2 vollständig rekristallisiert in das jeweilige Walzgerüst 4 einläuft. Es kann daher im Schritt S8 anhand der erfassten Walzkräfte F und/oder Walzmomente M (= gleichzeitig Messgrößen und erste Eigenschaften) das Walzmodell (= erstes Teilmodell 12) adaptiert werden, da im Rahmen des betrachteten Walzstichs das Gefügemodell (= zweites Teilmodell 13) nicht zum Tragen kommt. Wenn umgekehrt ein schnelles Walzen des Walzguts 2 erfolgt, kann das Gefügemodell adaptiert werden.

Viertes Beispiel:
Das Walzgut 2 soll wieder Stahl sein. Es wird in einer Kühlstrecke - beispielsweise der Kühlstrecke von FIG 3 - gekühlt.
Das erste Teilmodell 12 ist ein Wärmeübergangsmodell, das zweite Teilmodell 13 ein Phasenumwandlungsmodell. Die Temperatur des Walzguts 2 beim Einlaufen in die Kühlstrecke ist bekannt oder wird erfasst. Die Temperatur T des Walzguts 2 beim Auslaufen des Walzguts 2 aus der Kühlstrecke wird erfasst. Sie liegt in der Regel unter der Umwandlungstemperatur des Walzguts 2. Anhand der Legierungseigenschaften des Walzguts 2 und der Verweildauer des Walzguts 2 in der Kühlstrecke kann entschieden werden, ob das Walzgut 2 im Laufe des in der Kühlstrecke erfolgenden Abkühlprozesses vollständig umgewandelt wird (Austentitanteil = Null). Wenn dies der Fall ist, kann im Schritt S8 das Wärmeübergangsmodell (= erstes Teilmodell 12) adaptiert werden, da das Phasenumwandlungsmodell (= zweites Teilmodell 13) im Rahmen des betrachteten Walzguts 2 nicht zum Tragen kommt. Anderenfalls kann das Phasenumwandlungsmodell adaptiert werden.

Es sind auch Kombinationen der oben genannten Vorgehensweisen möglich. Beispielsweise kann das Modell 11 alle vier der genannten Teilmodelle 12, 13 umfassen, also ein Walzmodell, ein Gefügemodell, ein Phasenumwandlungsmodell und ein Wärmeübergangsmodell. Als Messgrößen F, M, T kommen insbesondere die Walzkräfte F und die Walzmomente M der Walzgerüste 4 sowie die Temperatur T des Walzguts 2 ausgangsseitig der Walzstraße in Frage. Wenn in einem derartigen Fall das Walzgut 2 langsam im austenitischen Bereich gewalzt wird, kann anhand der sich ergebenden Walzkräfte F und/oder Walzmomente M sowie der sich ergebenden Temperaturen T ein Adaptieren des Walzkraftmodells und des Wärmeübergangsmodells erfolgen. Diese beiden Modelle sind in diesem Fall erste Teilmodelle 12 im Sinne der vorliegenden Erfindung. Denn auf Grund des langsamen Walzens kommt das Gefügemodell (eines der zweiten Teilmodelle 13) nicht zum Tragen, auf Grund des austenitischen Walzens nicht das Phasenumwandlungsmodell (weiteres zweites Teilmodell 13). Wenn hingegen ein schnelleres Walzen im austenitischen Bereich erfolgt, kann auf Grund der sich ergebenen geänderten Walzkräfte F und/oder Walzmomente M das Gefügemodell adaptiert werden. Bei einem langsamen ferritischen Walzen kann das Phasenumwandlungsmodell anhand der sich ergebenden Walzkräfte F, Walzmomente M und Temperaturen T adaptiert werden. Bei einem schnellen ferritischen Walzen können das Phasenumwandlungsmodell und das Gefügemodell adaptiert werden, ersteres vorzugsweise anhand der erfassten Temperatur, letzteres vorzugsweise anhand der erfassten Walzkräfte F und Walzmomente M.

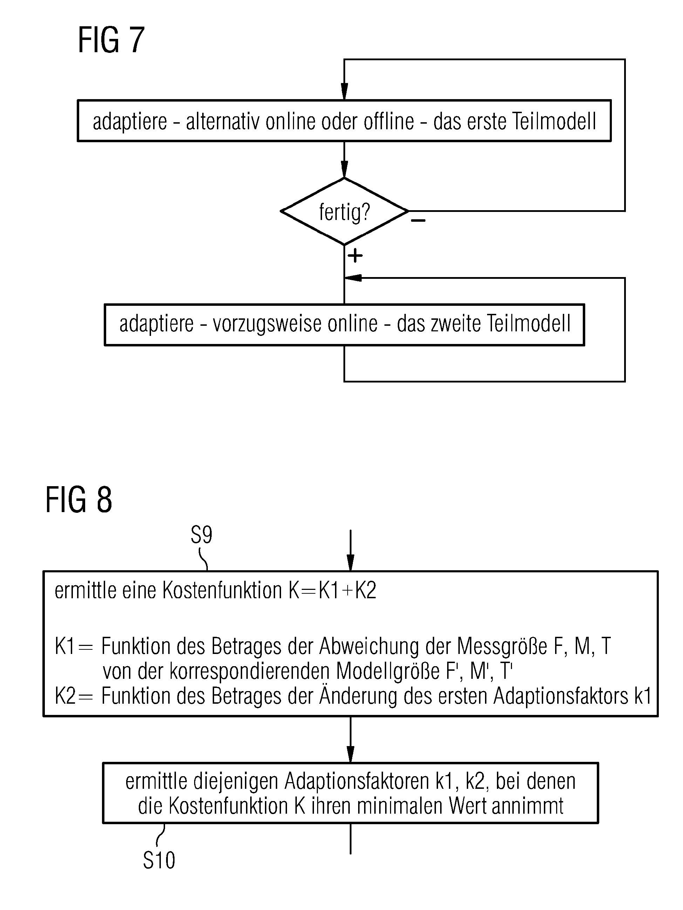

Aus den obigen Ausführungen ist ersichtlich, dass es entsprechend der Darstellung von FIG 7 von Vorteil ist, wenn das Adaptieren des ersten Teilmodells 12 vorab erfolgt. Das Adaptieren des ersten Teilmodells 12 kann, da es vorab erfolgt, alternativ online oder offline erfolgen. Das zweite Teilmodell 13 hingegen sollte entsprechend der Darstellung von FIG 7 vorzugsweise online adaptiert werden. Der Begriff "online" bedeutet, dass das Auswerten der in Echtzeit erfassten Messwerte F, M, T parallel zur laufenden Steuerung der Beeinflussungseinrichtung 1 durch die Steuereinrichtung 3 erfolgt. Bei einer offline Auswertung hingegen ist die Auswertung vom laufenden Betrieb entkoppelt.

Soweit bisher erläutert, wird beim Adaptieren des zweiten Teilmodells 13 ausschließlich das zweite Teilmodell 13 adaptiert. Das erste Teilmodell 12 wird in Verbindung mit dem Adaptieren des zweiten Teilmodells 13 überhaupt nicht adaptiert. Es ist jedoch möglich, auch eine geringfügige Adaption des ersten Teilmodells 12 vorzunehmen. In diesem Fall wird der Schritt S5 der FIG 4 und 6 durch Schritte S9 und S10 ersetzt, siehe FIG 8. Im Schritt S9 ermittelt die Steuereinrichtung 3 eine Kostenfunktion K. In die Kostenfunktion K geht zunächst die Abweichung der Messgröße F, M, T von der Modellgröße F', M', T' ein. Zusätzlich geht in die Kostenfunktion K ein Strafterm ein, der von der Adaption des ersten Teilmodells 12 als solcher abhängt.

Die Kostenfunktion K besteht also aus zwei Teilfunktionen K1, K2, wobei
- die Teilfunktion K1 vom Betrag der Abweichung der Messgröße F, M, T von der korrespondierenden Modellgröße F', M', T' abhängt und
- die zweite Teilfunktion K2 vom Betrag der Änderung des ersten Adaptionsfaktors k1 als solcher abhängt.

In der Regel handelt es sich bei den Teilfunktionen K1, K2 um die Quadrate oder eine höhere Potenz der entsprechenden Werte.

Im Schritt S10 ermittelt die Steuereinrichtung 3 diejenigen Adaptionsfaktoren k1, k2, bei denen die Kostenfunktion K ihren minimalen Wert annimmt. Diese Werte werden als entsprechende Adaptionsfaktoren k1, k2 übernommen.

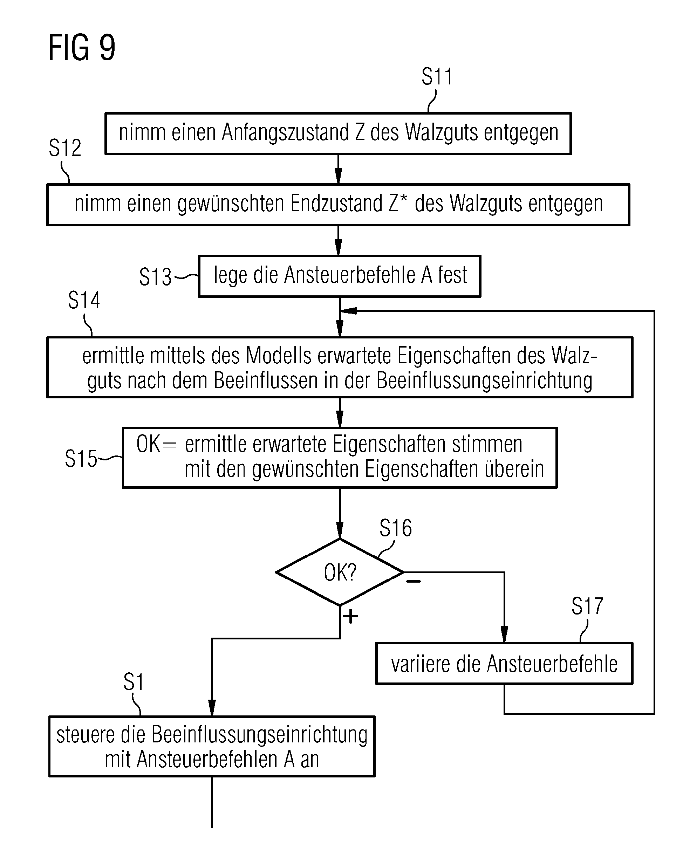

Zur Verwertung der mittels des Modells 11 ermittelten ersten und zweiten Eigenschaften des Walzguts 2 sind verschiedene Fallgestaltungen möglich. So ist es beispielsweise möglich, die Ansteuerbefehle A unabhängig vom Modell 11 zu ermitteln. In diesem Fall wird das Modell 11 nur für eventuelle spätere Steuerungseingriffe trainiert und/oder zur Vorhersage der Eigenschaften des Walzguts 2 verwendet. Besser ist es hingegen, wenn das Modell 11 in die Ermittlung der Ansteuerbefehle A eingebunden ist. In diesem Fall werden mittels des Modells 11 für eine Vielzahl möglicher Ansteuerbefehle A die entsprechenden ersten und zweiten Eigenschaften des Walzguts 2 ermittelt. Diejenigen Ansteuerbefehle A, für welche die sich ergebenden Eigenschaften des Walzguts 2 möglichst gut mit gewünschten Solleigenschaften des Walzguts 2 übereinstimmen, werden zur Ansteuerung der Beeinflussungseinrichtung 1 verwendet. FIG 9 zeigt vereinfacht eine mögliche Vorgehensweise.

Gemäß FIG 9 nimmt die Steuereinrichtung 3 beispielsweise in einem Schritt S11 einen Anfangszustand Z des Walzguts 2 entgegen. Der Anfangszustand Z beschreibt das Walzgut 2 vor dem Beeinflussen durch die Beeinflussungseinrichtung 1. In einem Schritt S12 nimmt die Steuereinrichtung 3 einen gewünschten Endzustand Z* des Walzguts 2 entgegen. Der Endzustand Z* bezieht sich auf den Zustand, den das Walzgut 2 nach dem Beeinflussen in der Beeinflussungseinrichtung 1 aufweisen soll. Der Endzustand Z* umfasst zumindest unter anderem Eigenschaften des Walzguts 2, die mittels des Walzmodells 11 und/oder des Zusatzmodells 12 ermittelbar sind.

In einem Schritt S13 legt die Steuereinrichtung 3 - wenn auch nur vorläufig - die Ansteuerbefehle A fest. In einem Schritt S14 ermittelt die Steuereinrichtung 3 unter Verwendung des Walzmodells 11 und des Zusatzmodells 12 erwartete Eigenschaften des Walzguts 2 nach dem Beeinflussen in der Beeinflussungseinrichtung 1.

In einem Schritt S15 ermittelt die Steuereinrichtung 3 die logische Variable OK. Die logische Variable OK nimmt den Wert "WAHR" dann und nur dann an, wenn die im Schritt S14 ermittelten erwarteten Eigenschaften - im Rahmen zulässiger Toleranzen - mit den im Schritt S12 entgegen genommenen, durch den Endzustand Z* bestimmten gewünschten Eigenschaften übereinstimmen. Anderenfalls nimmt die logische Variable OK den Wert "UNWAHR" an.

In einem Schritt S16 wird der Wert der logischen Variablen OK überprüft. Wenn die logische Variable OK den Wert "UNWAHR" aufweist, geht die Steuereinrichtung 3 zu einem Schritt S17 über. Im Schritt S17 variiert die Steuereinrichtung 3 die Ansteuerbefehle A. Sodann geht sie zum Schritt S14 zurück. Wenn die logische Variable OK hingegen den Wert "WAHR" aufweist, wird die Beeinflussungseinrichtung 1 mit den nunmehr endgültigen Ansteuerbefehlen A angesteuert. Der entsprechende Schritt ist in FIG 9 absichtlich mit dem Bezugszeichen S1 versehen, da er auch dem Schritt S1 der FIG 4 und 6 entspricht.

Die vorliegende Erfindung weist viele Vorteile auf. Insbesondere ist sie von der Komplexität her mit den im Stand der Technik ergriffenen Vorgehensweisen vergleichbar, zeigt aber überlegene Ergebnisse.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuerverfahren für eine Beeinflussungseinrichtung (1) für ein Walzgut (2) ,
- wobei eine Steuereinrichtung (3) die Beeinflussungseinrichtung (1) mit Ansteuerbefehlen (A) ansteuert, so dass die Beeinflussungseinrichtung (1) das Walzgut (2) entsprechend den Ansteuerbefehlen (A) beeinflusst,
- wobei die Steuereinrichtung (3) in Verbindung mit dem Beeinflussen des Walzguts (2) durch die Beeinflussungseinrichtung (1) in Echtzeit mindestens eine Messgröße (F, M, T) erfasst, die vom Wert einer ersten Eigenschaft des Walzguts (2) zum Zeitpunkt des Erfassens der Messgröße (F, M, T) abhängt,
- wobei die Steuereinrichtung (3) mittels eines die Vorgänge in der Beeinflussungseinrichtung (1) beschreibenden Modells (11) des Walzguts (2) eine mit der erfassten Messgröße (F, M, T) korrespondierende Modellgröße (F', M', T') ermittelt,
- wobei das Modell (11) ein auf mathematisch-physikalischen Gleichungen basierendes erstes Teilmodell (12) umfasst, unter dessen Verwendung der Wert der ersten Eigenschaft des Walzguts (2) zum Zeitpunkt des Erfassens der Messgröße (F, M, T) ermittelbar ist,
- wobei das Modell (11) ein auf mathematisch-physikalischen Gleichungen basierendes zweites Teilmodell (13) umfasst, mittels dessen die zeitliche Entwicklung einer zweiten Eigenschaft des Walzguts (2) während des Beeinflussens (1) ermittelbar ist,
- wobei der Wert der ersten Eigenschaft des Walzguts (2) zum Zeitpunkt des Erfassens der Messgröße (F, M, T) vom zeitlichen Verlauf der zweiten Eigenschaft oder vom Wert der zweiten Eigenschaft des Walzguts (2) zum Zeitpunkt des Erfassens der Messgröße (F, M, T) abhängt und/oder die Messgröße (F, M, T) zusätzlich zur Abhängigkeit vom Wert der ersten Eigenschaft auch vom Wert der zweiten Eigenschaft des Walzguts (2) zum Zeitpunkt des Erfassens der Messgröße (F, M, T) abhängt,
- wobei die Steuereinrichtung (3) mittels des Modells (11) den zeitlichen Verlauf der zweiten Eigenschaft des Walzguts (2), den Wert der ersten Eigenschaft des Walzguts (2) zum Zeitpunkt des Erfassens der Messgröße (F, M, T) und unter Verwendung des ermittelten zeitlichen Verlaufs der zweiten Eigenschaft des Walzguts (2) und des Wertes der ersten Eigenschaft des Walzguts (2) zum Zeitpunkt des Erfassens der Messgröße (F, M, T) die Modellgröße (F', M', T') ermittelt,
- wobei die Steuereinrichtung (3)
-- entweder anhand der Abweichung der erfassten Messgröße (F, M, T) von der Modellgröße (F', M', T') zwar das zweite Teilmodell (13), nicht aber das erste Teilmodell (12) adaptiert,
-- oder durch Optimieren einer Kostenfunktion (K) sowohl das erste Teilmodell (12) als auch das zweite Teilmodell (13) adaptiert, in die Kostenfunktion (K) zusätzlich zu der Abweichung der Messgröße (F, M, T) von der Modellgröße (F', M', T') ein von der Adaption des ersten Teilmodells (12) als solcher abhängiger Strafterm (K2) eingeht.

2. Steuerverfahren nach Anspruch 1,
**dadurch gekennzeichnet,**
- **dass** anhand von Zusatzinformationen (I) über das die Beeinflussungseinrichtung (1) durchlaufende Walzgut (2), die von der zweiten Eigenschaft verschieden sind, entschieden wird, ob die zweite Eigenschaft des Walzguts (2) beim Erfassen der mindestens einen Messgröße (F, M, T) einen vorbestimmten Wert aufweist,
- **dass** die Steuereinrichtung (3) bejahendenfalls anhand der Abweichung der Messgröße (F, M, T) von der Modellgröße (F', M', T') ausschließlich das erste, nicht aber das zweite Teilmodell (12, 13) adaptiert und
- **dass** die Steuereinrichtung (3) das Adaptieren des zweiten Teilmodells (13) nur verneinendenfalls vornimmt.

3. Steuerverfahren nach Anspruch 2,
**dadurch gekennzeichnet, dass** das Adaptieren des ersten Teilmodells (12) vorab erfolgt.

4. Steuerverfahren nach Anspruch 1, 2 oder 3,
**dadurch gekennzeichnet, dass** das Adaptieren des zweiten Teilmodells (13) online erfolgt.

5. Steuerverfahren nach einem der Ansprüche 1 bis 4,
**dadurch gekennzeichnet, dass** das erste Teilmodell (12) ein Wärmeübergangsmodell umfasst, mittels dessen der Wärmeübergang des Walzguts (2) an seine Umgebung modelliert wird und das als erste Eigenschaft die Temperatur (T') des Walzguts (2) liefert.

6. Steuerverfahren nach einem der Ansprüche 1 bis 4,
**dadurch gekennzeichnet, dass** das erste Teilmodell (12) ein Walzmodell umfasst, mittels dessen beim Walzen des Walzguts (2) auftretende Walzkräfte (F') und/oder Walzmomente (M') modelliert werden und das als erste Eigenschaft die beim Walzen des Walzguts (2) auftretenden Walzkräfte (F') und/oder Walzmomente (M') liefert.

7. Steuerverfahren nach einem der Ansprüche 1 bis 6,
**dadurch gekennzeichnet, dass** das zweite Teilmodell (13) ein Phasenumwandlungsmodell umfasst, mittels dessen die Phasenumwandlung des Walzguts (2) modelliert wird und das als zweite Eigenschaft die Phasenanteile des Walzguts (2) liefert.

8. Steuerverfahren nach einem der Ansprüche 1 bis 6,
**dadurch gekennzeichnet, dass** das zweite Teilmodell (13) ein Gefügemodell umfasst, mittels dessen die Rekristallisierung des Walzguts (2) modelliert wird und das als zweite Eigenschaft die Gefügestruktur des Walzguts (2) liefert.

9. Steuerverfahren nach einem der obigen Ansprüche,
**dadurch gekennzeichnet, dass** die anhand des Modells (11) ermittelte Modellgröße (F', M', T') mit der ersten Eigenschaft korrespondiert.

10. Steuerverfahren nach einem der obigen Ansprüche,
**dadurch gekennzeichnet, dass** der Steuereinrichtung (3) ein Anfangszustand (Z) des ersten Walzguts (2) und ein gewünschter Endzustand (Z*) des ersten Walzguts (2) vorgegeben sind und dass die Steuereinrichtung (3) die Ansteuerbefehle (A) unter Verwendung des Modells (11) ermittelt.

11. Steuerprogramm, das Maschinencode (9) umfasst, der von einer Steuereinrichtung (3) für eine Beeinflussungseinrichtung (1) für ein Walzgut (2) unmittelbar abarbeitbar ist und dessen Abarbeitung durch die Steuereinrichtung (3) bewirkt, dass die Steuereinrichtung (3) ein Steuerverfahren nach einem der obigen Ansprüche ausführt.

12. Steuerprogramm nach Anspruch 11,
**dadurch gekennzeichnet, dass** es auf einem Datenträger (8, 10) in maschinenlesbarer Form gespeichert ist.

13. Steuerprogramm nach Anspruch 12,
**dadurch gekennzeichnet, dass** der Datenträger (8) Bestandteil der Steuereinrichtung ist.

14. Steuereinrichtung für eine Beeinflussungseinrichtung (1) für ein Walzgut (2), **dadurch gekennzeichnet, dass** die Steuereinrichtung derart ausgebildet ist, dass sie im Betrieb ein Steuerverfahren nach einem der Ansprüche 1 bis 10 ausführt.

15. Beeinflussungseinrichtung für ein Walzgut (2),
**dadurch gekennzeichnet, dass** sie von einer Steuereinrichtung (3) nach Anspruch 14 gesteuert wird.
